Europäisches Patentamt

European Patent Office

Office européen des brevets

Publication number: **0 280 064**
**A1**

# EUROPEAN PATENT APPLICATION

(21) Application number: 88101304.9

(51) Int. Cl.⁴: **G10L 5/06**

(22) Date of filing: 29.01.88

(30) Priority: 30.01.87 JP 21426/87

(43) Date of publication of application:
**31.08.88 Bulletin 88/35**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Takao, Watanabe c/o NEC**
**Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) **Pattern matching system.**

(57) A distance between feature parameters of an input pattern and a reference pattern is calculated at each time point of the patterns. An accumulated distance of a first distance at a first time point and a second distance at each of a plurality of second time points before the first timepoint is determined. A path cost to be attached to each of a plurality of predetermined paths from the second time points to the first time point for each time point of the reference pattern is stored in a path cost memory. The path cost read out from the path cost memory in response to the time point of the reference pattern is used to weight the accumulated distance. An optimum path, having the minimum weighted accumulated distance value, from one of the second time points to the first time point is selected. Through the selection of the optimum paths, time-normalization (DP pattern matching) is performed between the input and reference patterns.

FIG. 5

EP 0 280 064 A1

## PATTERN MATCHING SYSTEM

### BACKGROUND OF THE INVENTION

This invention relates to improvements in pattern matching system for patterns of a time series of feature parameters.

In a known, widely used pattern recognition system, an input pattern is compared with the respective reference patterns stored in advance, and the most similar reference pattern is recognized as the input pattern. For the recognition of voice patterns which fluctute with time, a time-normalization utilizing a dynamic programming process such as that proposed in the specification of US Pat. No. 3,8l6,722 is known as a highly effective method.

In the dynamic programming (DP) process, an input pattern and a reference pattern of time series of feature parameter vectors are respectively represented by:

$$A = \{a(i) , i = l ..., I\}$$
$$B = \{b(j) , j = l, ..., J\}.$$

A matching distance between two patterns A and B is given by:

$$D(A, B) = \min \Sigma\, d(a(i) , b(j)). \quad j = j\,(i)$$

A cumulative distance is obtained by the following recurrence formula:     Initial condition:

$$g(O,O) = O;\ g(i, O) = \infty\ (i > 0)$$

recurrence formula:

$$g(i, j) = \min \{g(i\text{-}l, j\text{-}p) + d(i,j)\}\ p = l,2,3$$
$$i = l, ..., I;\ j = l, ..., J \qquad (l)$$

where d(i, j) represents the distance between vectors a(i) and b(j). The minimum value of the accumulated distance g(i, j) along a curve j = j(i) (called a matching path) representing time warping from a time point (l, l) to a time point (l, J) on a time point lattice (I x J) is determined by the dynamic programming process. The restrictions called slope constraint conditions are imposed upon the matching path to evade unnatural time warping. The above recurrence formula corresponds to the slope constraint condition shown in Fig. l-(A). Other slope constraint conditions such as those shown in Figs. l(B) and l(C) may be used.

In the conventional pattern matching system described above, however, this time warping (time-normalization) is performed in order to minimize the matching distance even for different categories. Therfore, there may be an unnatural time warping adaptation such as one which cannot occur in the matching of the same category in this case. More specifically, a smaller accumulated distance is obtained notwithstanding a larger distance should be determined for the patterns in the different categories. This results in a reduction in the correct recognition rate.

### SUMMARY OF THE INVENTION

An object of the present invention is, therefore, to provide a pattern matching system with high recognition rate.

Another object of the present invention is to provide a pattern matching system capable of eliminating an unnatural (abnormal) matching path between patterns in different categories.

Further object of the present invention is to provide a pattern matching system with a higher recognition rate in speaker-independent recognition system.

According to the invention, there is provided a pattern matching system in which the distance between an input pattern and a reference pattern at time point is obtained, time points at which each of the accumulated distances exhibits the minimum are connected to form a matching path, the system limits the advancement slope angle of the matching path to a predetermined angle region determined at each time of the reference pattern.

According to one aspect of the invention, there is provided a pattern matching system comprising, distance calculating means for obtaining the distance between feature parameters of an input pattern and a reference pattern which are time series of feature parameter vectors at each time point, integrating means for obtaining an integration value which is an accumulated distance of a first distance at a first time point and a second distance at each of a plurality of second time points before the first time point, the first and second distances being obtained by the distance calculating means, a path cost memory for storing a path cost attached, at each time point of the reference pattern, to each of a plurality of predetermined paths from the second time points to the first time point; path cost reaching means for reading from the path cost memory a path cost in response to the time point of the reference pattern, weighting means for weighting the path cost thereby read out to the integration value, and optimum path selecting means for selecting a path from one of the second time points to the first time point having the minimum weighted integration value to provide the integration value.

Other objects and features will be clarified from the following description with reference to the drawings:

## BRIEF DESCRIPTION OF THE DRAWINGS

Fig. 1 is an exemplified diagram of matching paths;

Fig. 2 is a diagram showing time warping between patterns in different categories;

Fig. 3 is a diagram illustrating the difference between the conventional method and the present invention with respect to the patterns shown in Fig. 2;

Figs. 4A and 4B are diagrams illustrating matching paths between three training patterns and a representative pattern, and the occurrence rate distribution of the paths; and

Fig. 5 is a block diagram of one embodiment of the present invention.

## DESCRIPTION OF THE PREFERRED EMBODIMENT

The basic principle of the invention resides in that the degree of slope constraint (degree of warping) is changed depending upon each time point of the reference pattern in order to eliminate the unnatural time-normalization (alignment) between patterns in different categories.

The degree of slope constraint depending upon each time point of the reference pattern is determined by the respective reference pattern. In general, phonemes of a voice include vowels and consonants, and the phonemes have different inherent lengths while vowels are easy to expand or contract and consonants are difficult to expand or contract.

Accordingly, an excessive time warping of a phoneme is unnatural. For the sake of eliminating this kind of unnatural time warping (time-normalization), it is suitable to effect a slope restriction. For example, in speaker-independent voice recognition, an average pattern of a plurality of training patterns is determined as a reference pattern or a representative pattern. The training patterns are obtained by utterance of words in the same category of a plurality of speakers. The deviation of each training pattern from the reference pattern is obtained at each time point of the reference pattern. The slope constraint can be determined on the basis of this deviation. Thus determined slope constraint allow the matching path only within this deviation range.

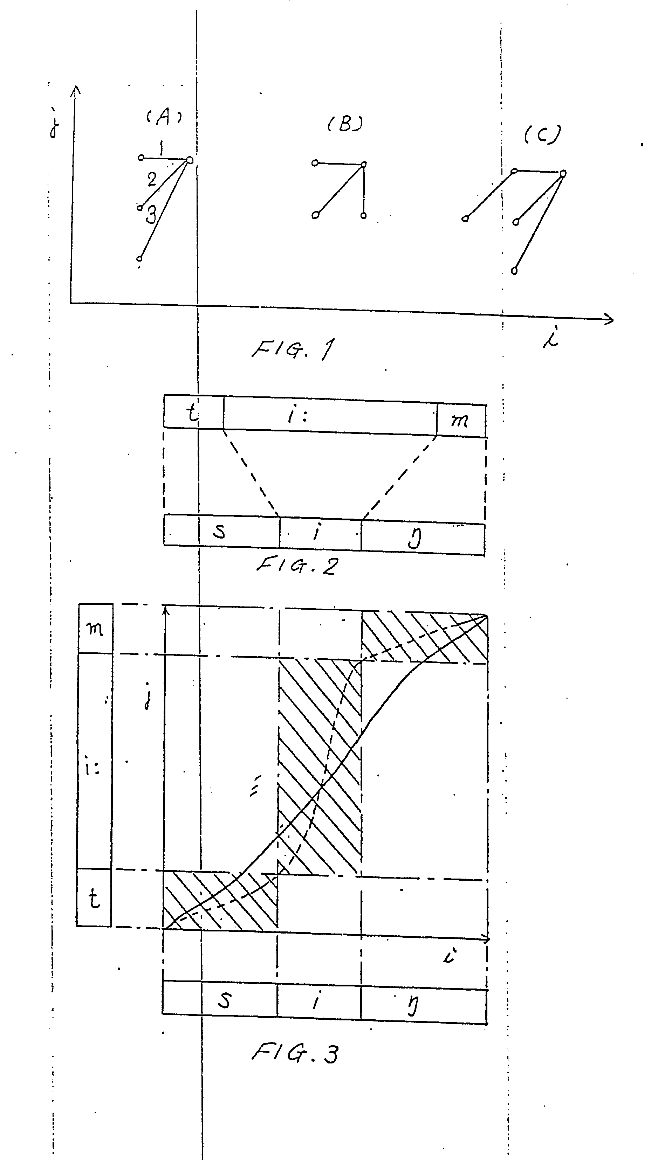

Figs. 2 and 3 show examples of unnatural pattern matching with respect to 'team' (ti:m) and 'sing' (si ŋ ) (matching path defined by broken line). Pairs of phonemes /t/ and /s/, /i:/ and /i/, and /m/ and / ŋ / are comparatively analogous to each other, resulting in the matching path as shown in the drawings. Since the inherent lengths of the phonemes /t/ and /s/ are different from each other, there is no need for such excessive time warping (unnatural matching path) as that illustrated in Figs. 2 and 3.

In accordance with the invention, to prevent the excessive time warping, slope constraint is effected by imposing a penalty on such time warping (matching path). The imposition of penalty increases the matching distance of an unnatural path between words having phoneme structures comparatively analogous to each other such as those described above, and eliminates the unnatural matching path.

More specifically, in the conventional DP matching, as shown in Fig. 3, the distance $d(i, j)$ between feature vectors in the hatched area becomes small and, therefore, there is a high probability of the path 3 shown in Fig. 1(A) being selected, resulting in an unnatural matching path such as that indicated by the broken line. However, if /i/ of the word pattern /si ŋ / is compared with other patterns of the same word, it is not always highly probable that the path 3 is selected in the section corresponding to /i/. For this reason, a plurality of training patterns are prepared to examine to what extent /i/ expands or contracts in the matching of word patterns in the same category, and the results can be utilized for the matching with an unknown word pattern. For example, in the matching of the same word patterns, there is a high probability of the path 2 shown in Fig. 1(A) being selected at a time in the section /i/ of si ŋ . Accordingly, it is suitable to select the path 2 with priority in the pattern matching with the unknown word pattern. As a result, the time-normalization is effected as indicated by the solid line in Fig. 3. In this case, the matching distance between the patterns becomes larger than that in the case of the path indicated by the broken line. That is, the matching distance between the patterns of different words is increased by taking the degree of the expansion and contraction into consideration.

In accordance with the present invention, as described above, the degree of slope constraint is changed depending upon each time point of the reference pattern. To effect this change, a path cost is provided for each path. The path cost is previously determined based on the probability that each of the paths (paths 1, 2 and 3 in Fig. 1(A)) is selected. This path cost can be determined by using training patterns as follows:

Let a set of M training patterns $T_m$ in the same category (cluster) be

$\{T_m = (t^1, ..., t^k, ..., t^K), m = 1, ..., M\}$ .

A reference pattern B is defined by a representative pattern of this set. The representative pattern may be an average pattern which is obtained by averaging the plurality of training patterns. In this set, $\underline{m}$ represents m-th pattern of the M training patterns, and $t^k$ represents a k-th feature vector in K feature vectors.

Path cost (degree of expansion or contraction) $P_r(j)$ attached to the reference pattern B at a time j is expressed by

$P_r = \{P_r(j), r = 1, 2, 3; j = 1, ..., J\}$

where $\underline{r}$ represents each of the paths 1, 2 and 3 of slope constraint shown in Fig. 1(A). $P_r(j)$ represents the probability that the path $\underline{r}$ (1, 2, or 3) is selected at the time j.

$P_r$ can be obtained from the occurrence rate distribution of the path $\underline{r}$ of slope constraint after training patterns $T_m$ other than the reference pattern B have been time-normalized by DP matching with the reference pattern B.

Let an optimum matching path obtained by DP matching between the patterns B and $T_m$ be

$H_m = (h_m(0), h(1), ..., h_m(j), ..., h_m(J))$

where $h_m(0) = 0$, $h_m(J) = K$, and a time $h_m(j-1)+1, ..., H_m(j)$ of the training pattern $T_m$ corresponds to the time j of the reference pattern B. Next, the path occurrence rate distribution on the optimum matching path represented by:

$W = \{W_1(j), W_2(j), W_3(j)), j = 1, ..., J\}$

is obtained at each time point of the reference pattern.

That is, under the initial conditions of

$\{(W_1(j), W_2(j), W_3(j)) = \{0, 0, 0\}, j = 1, ..., J\}$

the following processing steps are repeated with respect to $m = 1, ..., M; j = 1, ..., J$:

If $\Delta h_m(j) = 0$, [I]: $W_1(j) = W_1(j) + 1$

If $\Delta h_m(j) = 1$, [II]: $W_2(j) = W_2(j) + 1$

If $\Delta h_m(j) 1$, [III]

$$:\begin{cases} W_2(j) = W_2(j) + 1 \\ W_3(j) = W_3(j) + \Delta h_m(j) - 1 \end{cases}$$

where $\Delta h_m(j) = h_m(j) - h_m(j-1)$.

Path cost $P_r(j)$ is obtained from the path occurrence rate distribution W:

$P_r(j) = -\alpha \log (w_r(j)/W(j))$    (2)

$r = 1, 2, 3$

where $W(j) = (W_1(j) + W_2(j) + W_3(j))$, and $\alpha$ (> 0) is a weighing coefficient which is obgained by experiment.

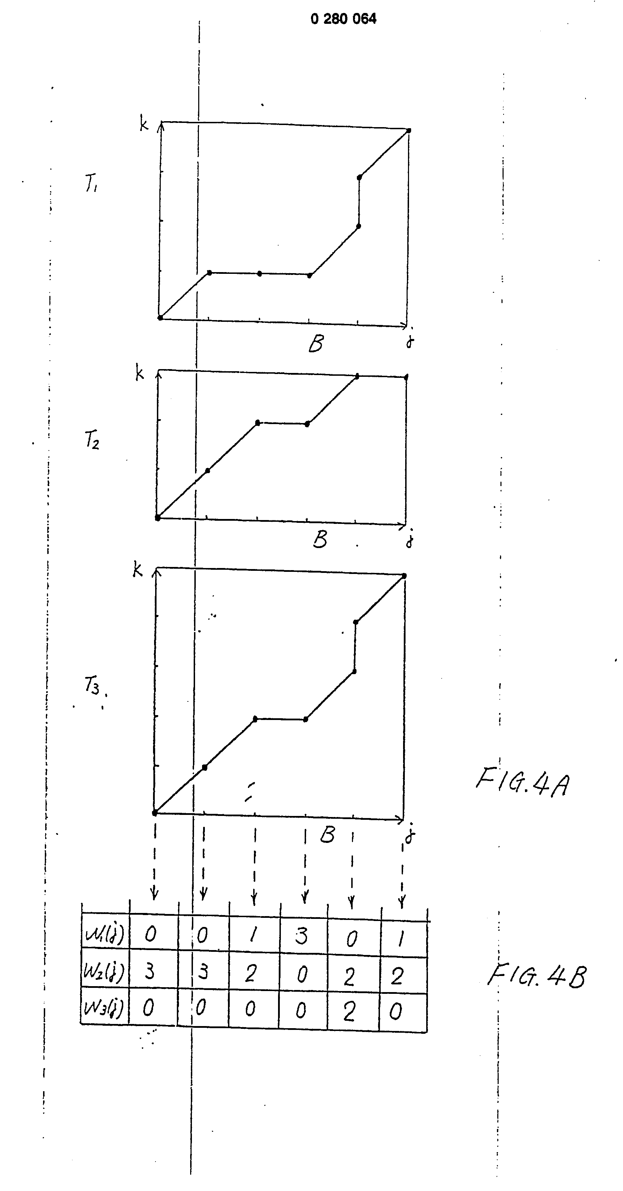

Fig. 4A shows examples of the optimum matching paths obtained by DP matching between the reference pattern B and the training patterns $T_1$, $T_2$, and $T_3$. Fig. 4B shows the occurrence rate distributions of the paths $W_1$, $W_2$, and $W_3$ at the times $j = 1$ to 6 obtained from these three optimum matching paths. $W_1$ represents a horizontal path (path 1 in Fig. 1(A)), $W_2$ an oblique path (path 2), and $W_3$ a path which includes at least one vertical path (e.g., path 3 in Fig. 1(A)). An optimum matching path $H_1$ of the matching with the training pattern $T_1$ shown in Fig. 4A is represented as follows:

$H_1 = \{H_1(0), h_1(1), h_1(2), h_1(3); h_1(4), h_1(5), h_1(6)\} = \{0, 1, 2, 2, 2, 4, 5\}$.

From thus obtained path distributions, path costs $P_1(j)$, $P_2(j)$, $P_3(j)$ are determined by

$P_1(j) = -\alpha \log \{(W_1(j)/(W_1(j) + W_2(j) + W_3(j))\}$

$P_2(j) = -\alpha \log \{(W_2(j)/(W_1(j) + W_2(j) + W_3(j))\}$

$P_3(j) = -\alpha \log \{(W_3(j)/(W_1(j) + W_2(j) + W_3(j))\}$

The following fundamental recurrence formula is calculated taking the path costs into account.

$$g(i, J) = d(i, j) + \min \begin{vmatrix} g(i-1, j) + P_1(j) \\ g(i-1, j-1) + P_2(j) \\ g(i, j-1) + P_3(j) \end{vmatrix} \quad \ldots \quad (3)$$

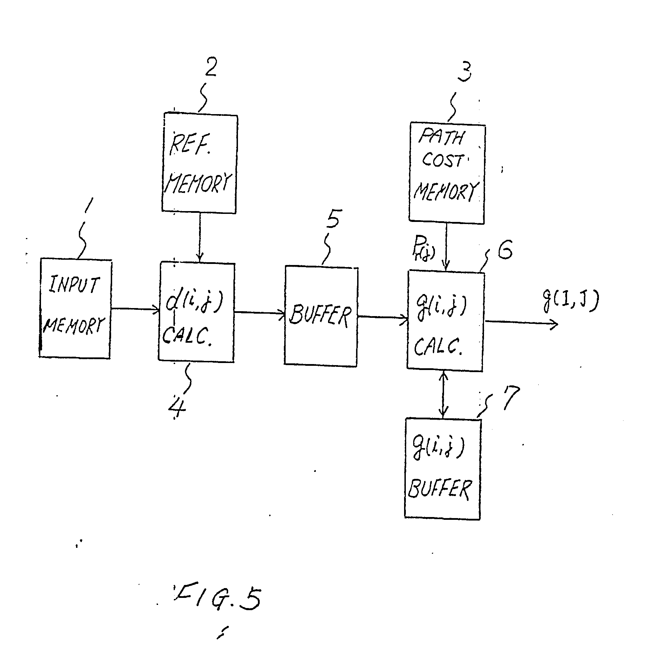

Referring to Fig. 5, an embodiment of the present invention operates on the basis of the above-described principle of the present invention. In detail, time series A and B of feature vectors of the input pattern and the reference pattern are stored in an input pattern memory I and a reference pattern memory 2. Path cost $P_j$ at the time point j of the reference pattern is stored in a path cost memory 3. A distance calculating section 4 calculates the distance $d(i, j)$ between the patterns A and B at the time point $(i, j)$ and stores it in a buffer 5. A recursion formula calculating section 6 calculates by the formula (3) the value (integration value) $g(i, j)$ of the accumulated distance by using the path cost $P_j(r)$ at the time point j read out from the path cost memory 3 and attached to the path r and integration values $g(i-l, j)$, $g(i-l, j-l)$, and $g(i, j-l)$ read out from an integration value $g(i, j)$ buffer 7. The calculated integration value $g(i, j)$ is stored in the $g(i, j)$ buffer 7 so that it is used in subsequent calculations. This calculating operation is repeated from $(i, j) = (l, l)$ to $(i, j) = (l, J)$, and an integration value $g(l, J)$ obtained at a time point $(i, j) = (l, J)$ is finally output as a matching score. In the recognition process, the matching between the input pattern and the different reference patterns is conducted in the above-described manner, and the reference pattern having the smallest matching score is judged as the input pattern. Circuit construction adapted for calculating the formula (3) to obtain the similarity measure or the distance and the recurrence formula (7), such as those shown in Fig. 4 of the above-mentioned U.S. Pat. No. 3,8I6,722, are applicable to the distance calculating section 4 and the recurrence formula calculating section 6.

**Claims**

I. A pattern matching system comprising:

distance calculating means for obtaining the distance between feature parameters of an input pattern and a reference pattern which are time series of feature parameter vectors at each time point;

integrating means for obtaining an integration value which is an accumulated distance of a first distance at a first time point and a second distance at each of a plurality of second time points before said first time point, said first and second distances being obtained by said distance calculating means;

a path cost memory for storing a path cost attached, at each time point of said reference pattern, to each of a plurality of predetermined paths from said second time points to said first time point;

path cost reading means for reading from said path cost memory a path cost in response to the time point of said reference pattern;

weighting means for weighting the path cost thereby read out to said integration value; and

optimum path selecting means for selecting a path from one of said second time points to said first time point having the minimum weighted integration value to provide the integration value.

2. A pattern matching system according to claim I, further comprising a recognition means for obtaining the integration value of the distance between the input pattern and a plurality of prepared reference patterns, and recognizing a reference pattern having the minimum distance integration value as the input pattern.

3. A pattern matching system according to claim I or 2, wherein said path cost is determined on the basis of a distribution of a plurality of training patterns in the same category of said reference pattern at each time point of said reference pattern.

4. A pattern matching system according to claim 3, wherein said distribution is the deviation distribution of each of said plurality of training patterns from a representative pattern selected from said training patterns.

5. A pattern matching system according to claim 4, wherein said representative pattern is an average pattern of said plurality of training patterns.

6. A pattern matching system according to claim 4 or 5, wherein said path cost is determined on the basis of the occurrence rate distribution of a matching path slope at each time point of said representative pattern obtained by time-normalization of each of said training patterns relative to said representative pattern through dynamic programming processing.

7. A pattern matching system according to claim 6, wherein a path cost $P_r(j)$ of a path r at a time point j is determined on the basis of an occurrence rate distribution W of said path r by

$P_r(j) = -\alpha \bullet \log W$

where $W = W_r(j)/W(j)$ , $W_r(j)$ represents the occurrence rate of said path r at said time point j, $W(j)$ represents the sum of the occurrence rates of all paths, and $\alpha$ represents a positive weighing coefficient.

8. A pattern matching system comprising:

an input pattern memory for memorizing a time series $A = \{a(i), i\text{-}I, ..., I\}$ of feature vectors of an input pattern;

a reference pattern memory for memorizing a time series $B = \{b(i), j\text{-}I, ..., J\}$ of feature vectors of a reference pattern;

distance calculating means for obtaining a distance $d(i, j)$ at a time point $(i, j)$ between two patterns read out from said two memories;

a path cost memory for memorizing a path cost which is a predetermined value attached at said time point j to each of a plurality of paths from plurality of time points before said time point $(i, j)$ to said time point $(i, j)$; and

weighting means for obtaining a weighted value by weighting a path cost read out from said path cost memory at said time point j to an integration distance value obtained at a time point on one of said plurality of paths.

9. A pattern matching system according to claim 8, wherein, under initial conditions that $g(O, O) = 0$, $g(i, O) = \infty$ $(i > O)$, said weighting means obtains said weighted value at said time point $(i, j)$ by

$$g(i, j) = d(i, j) + \min \begin{vmatrix} g(i\text{-}1, j) + P_1(j) \\ g(i\text{-}1, j\text{-}1) + P_2(j) \\ g(i, j\text{-}1) + P_3(j) \end{vmatrix}$$

where $P_1(j)$, $P_2(j)$, $P_3(j)$ are path costs attached to three paths to said time point $(i, j)$.

10. A pattern matching system in which the distance between time points of an input pattern and a reference pattern is obtained, time points at which each of the accumulated distances exhibits the minimum are connected to form a matching path, said system limits the advancement slope angle of said matching path to a predetermined angle region determined at each time of said reference pattern.

FIG. 1

FIG. 2

FIG. 3

FIG.4A

FIG.4B

| $W_1(j)$ | 0 | 0 | 1 | 3 | 0 | 1 |
|---|---|---|---|---|---|---|
| $W_2(j)$ | 3 | 3 | 2 | 0 | 2 | 2 |
| $W_3(j)$ | 0 | 0 | 0 | 0 | 2 | 0 |

2

REF.
MEMORY

3

PATH
COST
MEMORY

1

INPUT
MEMORY

5

BUFFER

$P_{(i,j)}$

6

4

$d(i,j)$
CALC.

$g(i,j)$
CALC.

$g(1,J)$

7

$g(i,j)$
BUFFER

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | ICASSP 83 PROCEEDINGS, IEEE INTERNATIONAL CONFERENCE ON ACOUSTICS, SPEECH AND SIGNAL PROCESSING, Boston, 14th-16th April 1983, vol. 3, pages 1037-1040, IEEE, New York, US; M.J. RUSSELL et al.: "Some techniques for incorporating local timescale variability information into a dynamic time-warping algorithm for automatic speech recognition" * Page 1038, left-hand column, lines 8-42 * | 1-10 | G 10 L 5/06 |
| A | US-A-4 400 828 (F.C. PIRZ et al.) * Column 7, line 32 - column 8, line 14 * | 1-9 | |
| A | EP-A-0 103 245 (NEC CORP.) * Claim 1 * | 10 | |

TECHNICAL FIELDS SEARCHED (Int. Cl.4)

G 10 L 5/06

The present search report has been drawn up for all claims

| Place of search | Date of completion of the search | Examiner |
|---|---|---|
| THE HAGUE | 17-05-1988 | ARMSPACH J.F.A.M. |